# EUROPEAN PATENT APPLICATION

(11) **EP 2 676 862 A2**
(43) Date of publication of application: **25.12.2013**
(21) Application number: 13003184.2
(22) Date of filing: 21.06.2013
(51) Int. Cl.: B62B 9/24

(54) **Strap collecting device for a child seat**

(30) Priority: 21.06.2012 CN 201210208981
(71) Applicant: Wonderland Nurserygoods Company Limited, Central Hong Kong (CN)
(72) Inventor: Liu, Zhenquan, Guangdong (CN)
(74) Representative: Hoefer & Partner

(57) **Abstract**

The present invention provides a strap collecting device (50) adapted for an infant carrier (10) and the infant carrier (10) with the strap collecting device (50). The infant carrier (10) includes a seat (20), a seat cushion (30) covering the seat (20), and a strap component (40) disposed on the seat cushion (30). The strap collecting device (50) is disposed on the seat cushion (30) and separated from the seat (20), for collecting at least one part of the strap component (40), so as to enhance convenience and safety of the infant carrier (10).

## Description

### Field of the Invention

The present invention relates to a strap collecting device according to the pre-characterizing clause of claim 1.

### Background of the Invention

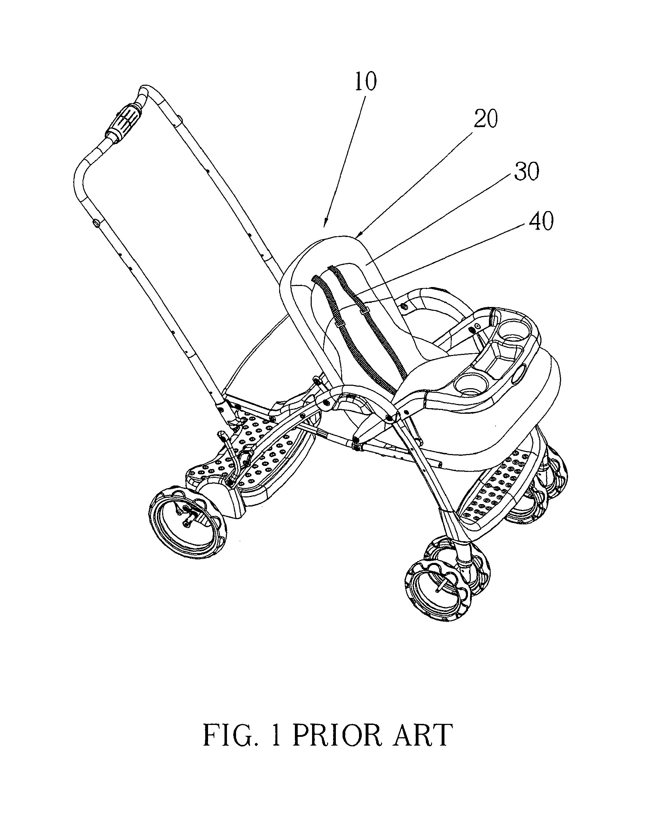

For a popular infant carrier, numerous safety issues need to be considered. For example, please refer to FIG.1, FIG.1 is a schematic drawing of an infant carrier 10 in the prior art. The infant carrier 10 can be a stroller. The infant carrier 10 includes a seat 20, a seat cushion 30 covering the seat 20, and a strap component 40 disposed on the seat cushion 30. The strap component 40 can be a fastening strap, a safety belt, or a strap for adjusting an angle of a backrest, which can be equipped with an infant feeding chair, an infant bed, a high chair or a stroller, so as to carry the infant carrier 10 conveniently or attach a label. However, the long strap component 40 might knot as an annular shape to strap an infant's neck or to hook external objects, resulting in overturn of the infant carrier 10. Hence, there is a need to improve above dangerous problems.

### Summary of the Invention

This in mind, the present invention aims at providing a strap collecting device capable of collecting at least one part of a strap component to fix the strap component stably, so as to enhance convenience and safety of an infant carrier.

This is achieved by a strap collecting device according to claim 1. The dependent claims pertain to corresponding further developments and improvements.

As will be seen more clearly from the detailed description following below, the claimed strap collecting device includes a main body disposed on a seat cushion and separated from a seat, for collecting at least one part of the strap component.

In order to achieve above purposes, the present invention is to provide a strap collecting device adapted for an infant carrier. The infant carrier includes a seat, a seat cushion covering the seat, and a strap component disposed on the seat cushion. The strap collecting device includes a main body disposed on the seat cushion and separated from the seat, for collecting at least one part of the strap component.

Preferably, the main body includes a chamber for containing the at least one part of the strap component, and a first opening communicating with the chamber, wherein the at least one part of the strap component passes through the first opening to be contained inside the chamber.

According to an embodiment of the present invention, the main body is a sleeve, the chamber is formed inside the sleeve, and the first opening is formed on an end of the sleeve.

Preferably, the sleeve is separated from the seat cushion.

Besides, the strap component includes a locking portion, a second opening is formed on the other end of the sleeve and communicated with the chamber, and the locking portion of the strap component passes through the second opening.

Preferably, the sleeve comprises a flexible material layer.

Preferably, the flexible material layer is a polyethylene (PE) material layer, an Ethylene Vinyl Acetate (EVA) material layer, or a combination thereof.

Preferably, the sleeve is disposed on a front side or/and a back side of the seat cushion.

According to another embodiment of the present invention, the main body is a bag, the chamber is formed inside the bag, and the first opening is formed on an end of the bag.

Preferably, the bag is connected with the seat cushion.

Besides, the strap collecting device further includes a sealing module disposed on the first opening for opening or sealing the first opening.

Preferably, the sealing module is a button module, a zipper module, or a fastening tape module.

Preferably, the bag is disposed on a front side or/and a back side of the seat cushion.

According to another embodiment of the present invention, the main body is a ring, the chamber is encircled by the ring, and the first opening is formed on an end of the ring.

Preferably, the ring is connected with the seat cushion.

Preferably, a second opening is formed on the other end of the ring and communicated with the chamber, and the at least one part of the strap component passes through the first opening, the second opening and the chamber to wind around the ring.

Preferably, the ring is disposed on a front side or/and a back side of the seat cushion.

Preferably, the other part of the strap component not collected by the strap collecting device is less than 360 mm.

Preferably, the other part of the strap component not collected by the strap collecting device is less than 188 mm.

In the present invention, the strap collecting device of the present invention can collect the at least one part of the strap component to fasten the strap component stably without separation so as to prevent from knotting as an annular shape to strap the infant's neck or to hook external objects, resulting in overturn of the infant carrier. It not only has simple structure and easy operation but also can enhance convenience and safety of the infant carrier.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG.1 is a schematic drawing of an infant carrier in the prior art,
FIG.2 to FIG.4 are respectively schematic drawings of an infant carrier with a strap collecting device according to different embodiments of the present invention, and
FIG.5 to FIG.7 are respectively partial schematic drawings of the infant carrier with the strap collecting device according to other different embodiments of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

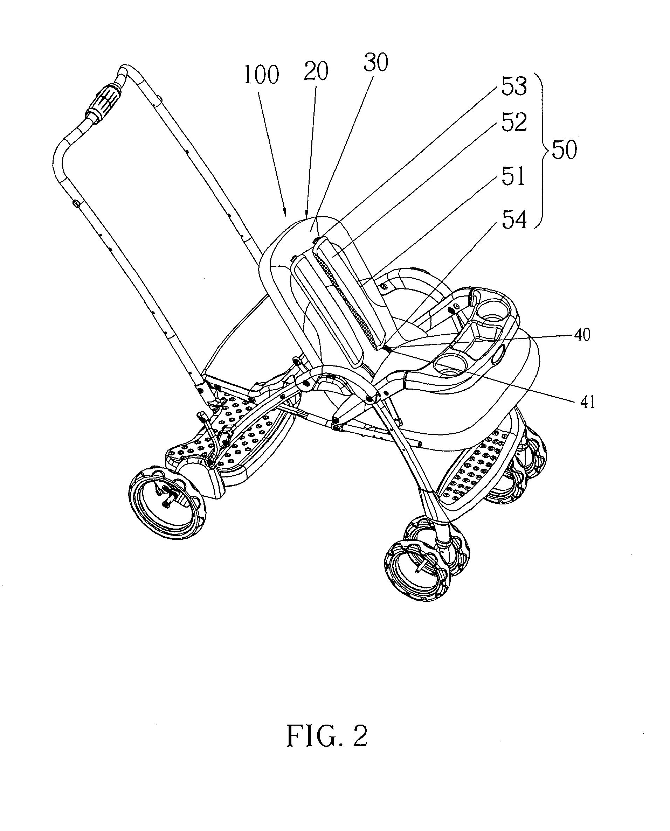

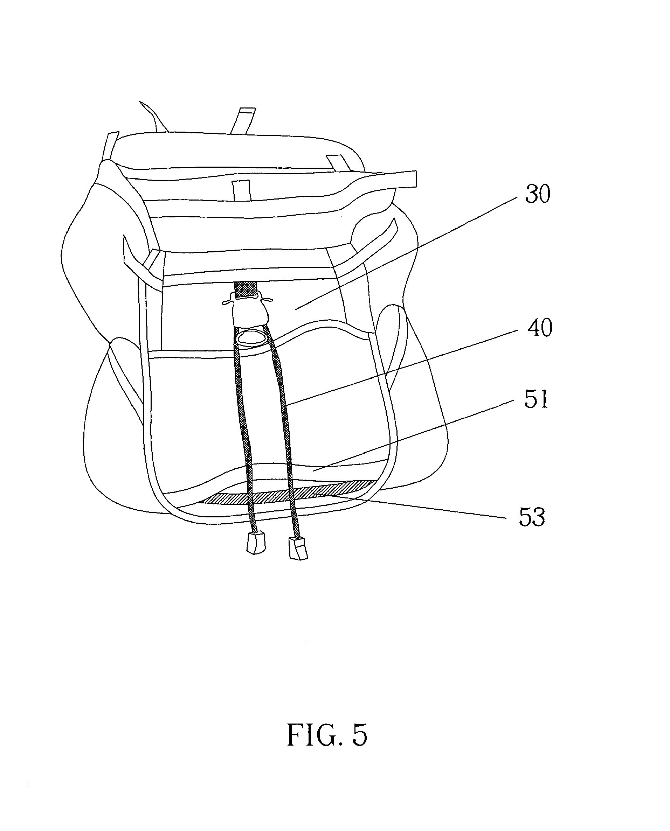

Please refer to FIG.2 to FIG.7. FIG.2 to FIG.4 are respectively schematic drawings of an infant carrier 100 with a strap collecting device 50 according to different embodiments of the present invention. FIG.5 to FIG.7 are respectively partial schematic drawings of the infant carrier 100 with the strap collecting device 50 according to other different embodiments of the present invention. The infant carrier 100 can be a stroller. The infant carrier 100 includes a seat 20, a seat cushion 30 covering the seat 20, and a strap component 40 disposed on the seat cushion 30. The seat 20 includes a seat portion for supporting a bottom of an infant, and a backrest portion for supporting the infant's back. The backrest portion is inclined relative to the seat portion so that the infant can sit on the seat 20 comfortably. Additionally, the seat cushion 30 covers the seat 20 to make the infant comfortable. The strap component 40 can be a safety belt disposed on the seat cushion 30, a strap for adjusting an angle of the backrest portion, a strap for carrying the infant carrier 100, or a strap for attaching a label, but is not limited to it, as required otherwise by designers.

The infant carrier 100 further includes a strap collecting device 50 disposed on the seat cushion 30 and separated from the seat 20, for collecting at least one part of the strap component 40. Because the strap collecting device 50 can collect the at least one part of the strap component 40, the strap component 40 can be fastened stably without separation so as to prevent from knotting as an annular shape to strap the infant's neck or to hook external objects, resulting in overturn of the infant carrier 100. It can enhance convenience and safety of the infant carrier 100.

Preferably, the strap collecting device 50 includes a main body 51 disposed on the seat cushion 30 and separated from the seat 20. The main body 51 includes a chamber 52 for containing the at least one part of the strap component 40, and a first opening 53 communicating with the chamber 52. The at least one part of the strap component 40 can pass through the first opening 53 to be contained inside the chamber 52. The main body 51 can be installed on the seat cushion 30 in a position corresponding to the strap component 40 to fix the strap component 40 effectively. The strap component 40 can pass through the first opening 53 to be contained inside the chamber 52 of the main body 51 conveniently due to communication of the first opening 53 and the chamber 52.

As shown in FIG.2, the main body 51 can be a strip-shaped sleeve in this embodiment, but is not limited to it. The chamber 52 is formed inside the sleeve, and the first opening 53 is formed on an end of the sleeve. The strap component 40 can pass through the first opening 53 to be contained inside the chamber 52 of the sleeve conveniently, so as to prevent the strap component 40 from knotting as an annular shape. It can enhance convenience in collecting the strap component 40. Preferably, the sleeve and the seat cushion 30 are separated from each other, for easy disassembly of the sleeve.

In addition, the strap component 40 includes a locking portion 41 for connecting to other strap component or other structure of the infant carrier 100. A second opening 54 is formed on the other end of the sleeve and communicated with the chamber 52, and the locking portion 41 of the strap component 40 can pass through the second opening 54. For collecting the strap component 40, the at least one part of the strap component 40 can pass through the first opening 53 to be contained inside the chamber 52. Then, the other part of the strap component 40 with the locking portion 41 can pass through the second opening 54 to connect with or disconnect from other strap component or other structure of the infant carrier 100.

Preferably, the sleeve can include a flexible material layer for increasing practicability, fire prevention and safety of the main body 51. The flexible material layer can be a polyethylene (PE) material layer, an Ethylene Vinyl Acetate (EVA) material layer, or a combination thereof, due to accessible and flexible characteristics.

Preferably, the sleeve can be disposed on a front side or/and a back side of the seat cushion 30. The sleeve can be installed on the seat cushion 30 in a position corresponding to the strap component 40 to fix the strap component 40 in different positions, so as to ensure the safety of the infant.

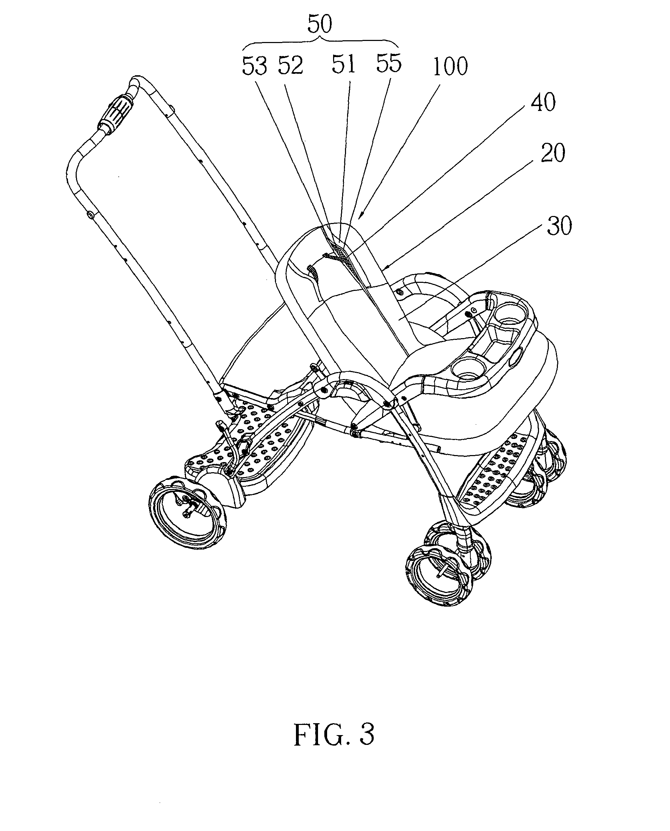

As shown in FIG.3 to FIG.5, the main body 51 can be a bag in this embodiment. The chamber 52 is formed inside the bag, and the first opening 53 is formed on an end of the bag. The bag is a soft structure for containing the strap component 40 easily. The bag can be connected with the seat cushion 30 to facilitate fastening the bag, so that the strap component 40 can be collected conveniently.

Besides, the strap collecting device 50 further includes a sealing module 55 disposed nearby the first opening 53 for opening or sealing the first opening 53. As the at least one part of the strap component 40 is collected inside the chamber 52 and the first opening 53 is sealed by the sealing module 55, the strap component 40 can be contained in the chamber 52 stably so as to prevent the strap component 40 from separating from the chamber 52. As the first opening 53 is opened by the sealing module 55, the strap component 40 can be taken out for utilization. The sealing module 55 can be a button module, a zipper module, or a fastening tape module, which is applicable and accessible. For example, a male button and a corresponding female button can be disposed nearby the first opening 53 to buckle with each other as the sealing module 55 is the button module. Two slider zippers can be disposed on two sides of the first opening 53 to zip with each other as the sealing module 55 is the zipper module. Two Velcro tapes can be disposed on two sides of the first opening 53 to attach with each other as the sealing module 55 is the fastening tape module.

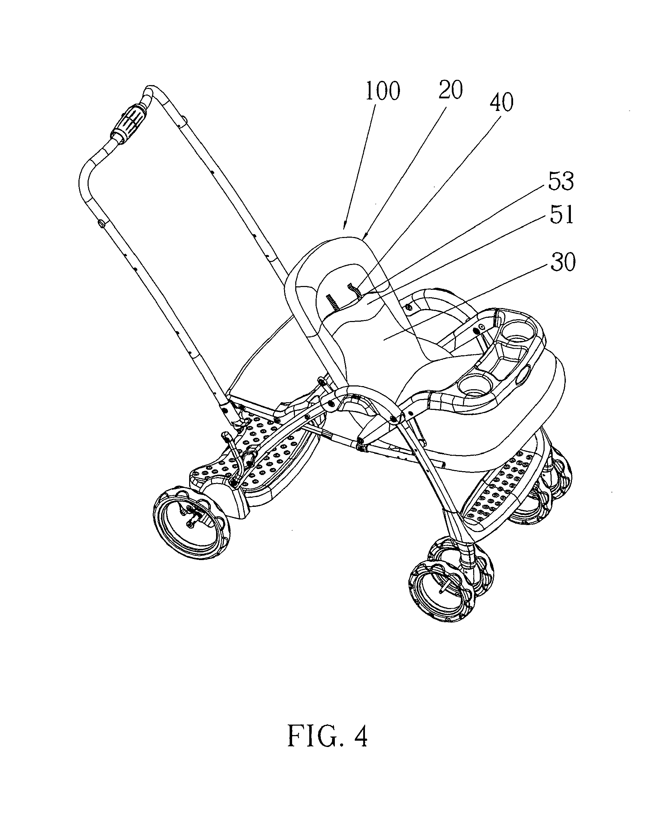

Preferably, the bag can be disposed on the front side or/and the back side of the seat cushion 30. The bag can be installed on the seat cushion 30 in a position corresponding to the strap component 40 to collect the strap component 40 in different positions, so as to ensure the safety of the infant. As shown in FIG.3, the two bags are respectively located on lateral ends of the front side of the seat cushion 30 and nearby the outside of the strap component 40 for collecting the two strap components 40 on lateral sides of the seat cushion 30. In another embodiment as shown in FIG.4, the bag is located on a center of the seat cushion 30 so as to collect the strap component 40 from bottom to top, for preventing the strap component 40 from knotting as an annular shape. In another embodiment as shown in FIG.5, the bag is located on a bottom of the back side of the seat cushion 30 so as to collect the strap component 40 on the back side of the seat cushion 30.

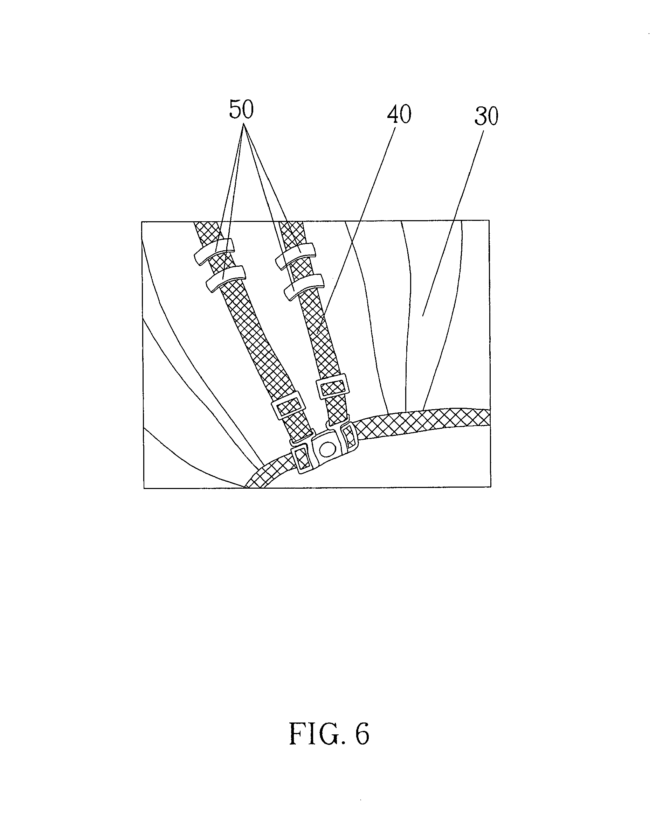

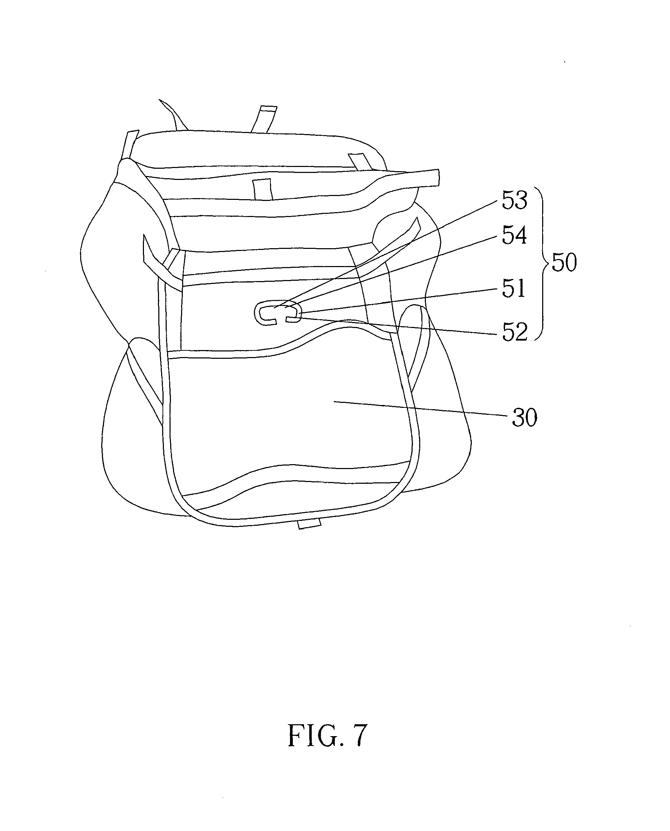

As shown in FIG.6 and FIG.7, the main body 51 can be a ring in this embodiment. The chamber 52 can be encircled by the ring, and the first opening 53 is formed on an end of the ring. For collecting the strap component 40, the at least one part of the strap component 40 can pass through the first opening 53 to wind inside the chamber 52. Preferably, the ring can be connected with the seat cushion 30 to ensure that the strap component 40 can be collected by the ring stably. Additionally, the second opening 54 is formed on the other end of the ring and communicated with the chamber 52, and the at least one part of the strap component 40 can pass through the first opening 53, the second opening 54 and the chamber 52 to wind around the ring. Preferably, the ring can be disposed on the front side or/and the back side of the seat cushion 30. The ring can be installed on the seat cushion 30 in a position corresponding to the strap component 40 to collect the strap component 40 in different positions, so as to ensure the safety of the infant.

In above-mentioned embodiments, the other part of the strap component 40, which is not collected by the strap collecting device 50, can be designed to be less than 360 mm, for ensuring that the uncollected part of the strap component 40 cannot knot as an annular shape easily, so as to prevent from strapping the infant's neck or from hooking external objects, resulting in overturn of the infant carrier 100. It can enhance convenience and safety of the infant carrier 100. Preferably, the other part of the strap component 40, which is not collected by the strap collecting device 50, can be designed to be less than 188 mm, for enhancing the collecting effect of the strap collecting device 50.

In contrast with the prior art, the strap collecting device and the infant carrier therewith of the present invention can collect the at least one part of the strap component to fasten the strap component stably without separation so as to prevent from knotting as an annular shape to strap the infant's neck or to hook external objects, resulting in overturn of the infant carrier. It not only has simple structure and easy operation but also can enhance convenience and safety of the infant carrier.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A strap collecting device (50) adapted for an infant carrier (10), the infant carrier (10) comprising a seat (20), a seat cushion (30) covering the seat (20), and a strap component (40) disposed on the seat cushion (30), **characterized in that** the strap collecting device (50) comprising a main body (51) disposed on the seat cushion (30) and separated from the seat (20), for collecting at least one part of the strap component (40).

2. The strap collecting device (50) of claim 1, **characterized in that** the main body (51) comprises a chamber (52) for containing the at least one part of the strap component (40), and a first opening (53) communicating with the chamber (52), wherein the at least one part of the strap component (40) passes through the first opening (53) to be contained inside the chamber (52).

3. The strap collecting device (50) of claim 2, **characterized in that** the main body (51) is a sleeve, the chamber (52) is formed inside the sleeve, and the first opening (53) is formed on an end of the sleeve.

4. The strap collecting device (50) of claim 3, **characterized in that** the sleeve is separated from the seat cushion (30).

5. The strap collecting device (50) of claim 3, **characterized in that** the strap component (40) comprises a locking portion (41), a second opening (54) is formed on the other end of the sleeve and communicated with the chamber (52), and the locking portion (41) of the strap component (40) passes through the second opening (54).

6. The strap collecting device (50) of claim 3, **characterized in that** the sleeve comprises a flexible material layer.

7. The strap collecting device (50) of claim 6, **characterized in that** the flexible material layer is a polyethylene (PE) material layer, an Ethylene Vinyl Acetate (EVA) material layer, or a combination thereof.

8. The strap collecting device (50) of claim 3, **characterized in that** the sleeve is disposed on a front side or/and a back side of the seat cushion (30).

9. The strap collecting device (50) of claim 2, **characterized in that** the main body (51) is a bag, the chamber (52) is formed inside the bag, and the first opening (53) is formed on an end of the bag.

10. The strap collecting device (50) of claim 9, **characterized in that** the bag is connected with the seat cushion (30).

11. The strap collecting device (50) of claim 9, further **characterized by** a sealing module (55) disposed nearby the first opening (53) for opening or sealing the first opening (53).

12. The strap collecting device (50) of claim 11, **characterized in that** the sealing module (55) is a button module, a zipper module, or a fastening tape module.

13. The strap collecting device (50) of claim 9, **characterized in that** the bag is disposed on a front side or/and a back side of the seat cushion (30).

14. The strap collecting device (50) of claim 2, **characterized in that** the main body (51) is a ring, the chamber (52) is encircled by the ring, and the first opening (53) is formed on an end of the ring.

15. The strap collecting device (50) of claim 14, **characterized in that** the ring is connected with the seat cushion (30).

16. The strap collecting device (50) of claim 14, **characterized in that** a second opening (54) is formed on the other end of the ring and communicated with the chamber (52), and the at least one part of the strap component (40) passes through the first opening (53), the second opening (54) and the chamber (52) to wind around the ring.

17. The strap collecting device (50) of claim 14, **characterized in that** the ring is disposed on a front side or/and a back side of the seat cushion (30).

18. The strap collecting device (50) of claim 1, **characterized in that** the other part of the strap component (40) not collected by the strap collecting device (50) is less than 360 mm.

19. The strap collecting device (50) of claim 18, **characterized in that** the other part of the strap component (40) not collected by the strap collecting device (50) is less than 188 mm.
